# EUROPEAN PATENT APPLICATION

(11) **EP 0 563 941 A1**
(43) Date of publication of application: **06.10.1993**
(21) Application number: 93105373.0
(22) Date of filing: 31.03.1993
(51) Int. Cl.: F16H 37/02, F16H 47/06

(54) **Power train for an automotive vehicle**

(30) Priority: 31.03.1992 JP 76717/92
(71) Applicant: Mazda Motor Corporation, Aki-gun Hiroshima-ken (JP)
(72) Inventor: Esaka, Seiji, Aki-gun, Hiroshima-ken (JP)
(74) Representative: Heim, Hans-Karl, Dipl.-Ing.

(57) **Abstract**

A power train system having a continuous speed variable transmission is provided with a front clutch, disposed between an engine and the transmission, for connecting and disconnecting the transmission of engine torque to the transmission and a rear clutch, disposed between the transmission and a power train output shaft, for preventing the transmission of reactive torque to the transmission through the power train output shaft. Both the front and rear clutches are selectively locked and unlocked in accordance with vehicle driving conditions.

## Description

### BACKGROUND OF THE INVENTION

### 1. Field of the Invention

This invention relates to a power train system for an automotive vehicle, and, more particularly, to an automotive vehicle power train system having a continuously speed variable transmission.

### 2. Description of Related Art

Typically, automotive vehicle power train systems include transmissions, for causing engine torque conversion to effect a change in ratio between engine rpm and driving wheel rpm according to vehicle driving conditions, which are divided into two types, such as a multiple speed type of transmissions and a continuous speed variable type of transmissions. The multiple speed type of transmissions have gear transmission mechanisms such as planetary gear mechanisms. The continuous speed variable type of transmissions have frictional power transmission mechanisms, such as a belt type of transmissions and a so-called toroidal type of transmissions.

Such a belt type continuous speed variable transmission toroidal uses a belt, made of, for instance, metal, which is mounted around and stretched between a continuous groove width variable drive pulley secured to a transmission input shaft and a continuous groove width variable driven pulley secured to a transmission output shaft. The gear ratio can be continuously changed by continuously changing the groove widths of the drive and driven pulleys. On the other hand, a toroidai type continuous speed variable transmission essentially has a toroidal surface input disk and a toroidal surface output disk, one of which is changeable in axial position relative to the other, and a slide roller disposed between and in contact with the toroidal surfaces of the input and output disks. The gear ratio of the toroidal type transmission can be continuously changed by continuously changing the angle of inclination of the roller with respect to an axis of the transmission output shaft. In order for these continuous speed variable transmissions to be desirably maintained, it is essential to provide a thin oil film in an interface between the belt and the disks of the belt type continuous speed variable transmission and, similarly, in an interface between the slide roller and the toroidal disks of the toroidal type continuous speed variable transmission.

There are many variations of arrangement of such a continuous speed variable transmission, i.e. a belt type continuous speed variable transmission and a toroidal type continuous speed variable transmission, in a power train system of an automotive vehicle. In the most general and basic arrangement, a start clutch is disposed between an engine and the continuous speed variable transmission. Otherwise, there are disposed a forward-reverse change clutch after a torque converter for allowing differential rotation between an engine output shaft and a transmission input shaft, and the continuous speed variable transmission after the forward-reverse change clutch.

However, the power transmission constructed above is possibly reactively driven by the drive wheels while the engine is stopped, and hence, the oil pump is halted, such as while the vehicle is being towing. In this event, lubrication is not made in the power train system, disabling to provide a thin oil film in the interface. This results in wearing and tearing of contacted surfaces of the belt and the disks of the belt type continuous speed variable transmission and, similarly, of contacted surfaces of the slide roller and the toroidal disks of the toroidal type continuous speed variable transmission. Especially, in the toroidal type continuous speed variable transmission, the roller may slide on the toroidal surfaces being kept in line contact with the toroidal surfaces. Accordingly, if the roller slides on the toroidal surfaces without oil film formed therebetween, the slide surfaces suffer great surface damage. Such an issue occurs even a power train system having a parallel arrangement of a continuous speed variable transmission and a torque converter which provides two torque paths, i.e. a torque path passing through the continuous speed variable transmission and a torque path passing through, in order from the input side, the torque converter and a speed reduction device, which are selectively effected in accordance with vehicle driving conditions, while the vehicle is being towing.

The reactive torque transmission of a power train system during towing of a vehicle may be prevented by arranging a forward-reverse change clutch of a continuous speed variable transmission after a torque converter. In this arrangement, however, at the beginning of starting of the engine, the continuous speed variable transmission is possibly operated before a sufficient oil pressure has not yet been developed in the power transmission and, accordingly is not yet sufficiently lubricated. In this event, wearing and tearing of contacted surfaces of slidingly contacting elements of the continuous speed variable transmission occurs similarly to while the vehicle is being towing.

### SUMMARY OF THE INVENTION

It is therefore an object of the present invention to provide a power train system, having a continuous speed variable transmission which causes continuous engine torque conversion to effect a continuous change in ratio between engine rpm and driving wheel rpm according to vehicle driving conditions, which is prevented from being reactively driven with insufficient lubrication or without lubrication.

The foregoing object of the present invention is accomplished by providing a power train system, having a continuous speed variable transmission means, such as a toroidal type transmission, which causes continuous engine torque conversion and transmits the converted torque to the drive wheel through a power train output shaft, such as a propeller shaft. The power train system includes a front clutch means, such as a hydraulically operated clutch, disposed between an engine and the continuous speed variable transmission means so as to connect and disconnect the transmission of engine torque to the continuous speed variable transmission means, and a rear clutch means, such as a hydraulically operated clutch, disposed between the continuous speed variable transmission means and the power train output shaft so as to prevent the transmission of reactive torque to the transmission output shaft from the drive wheels through the power train output shaft. These front and rear clutch means are selectively locked and unlocked by a control system, such as a hydraulic control circuit, in accordance with vehicle driving conditions. Specifically, when said continuous speed variable transmission means is in its neutral position and in its park position, the front and rear clutch means are, respectively, unlocked and locked. Further, when the engine is stopped during, for instance, towing the vehicle, both the front and rear clutch means are unlocked.

The front and rear clutch means are unlocked at the beginning of engine start or during towing of the vehicle, so that the continuous speed variable transmission is positively prevented from being driven with reactive torque from the drive wheels with insufficient lubrication or without lubrication and from suffering wearing and tearing of frictional slide elements of the continuous speed variable transmission. Furthermore, during towing the vehicle, since the continuous speed variable transmission does not operate actively nor reactively, it is not resistive to towing of the vehicle. In addition, at the beginning of engine start, the continuous speed variable transmission does not function as an engine load, so as to enable the engine to be lightly started.

### BRIEF DESCRIPTION OF THE DRAWINGS

The above and other objects and features of the present invention will be clearly understood from the following detailed description with respect to preferred embodiments thereof when considered in conjunction with the accompanying drawings, in which the same reference characters and numerals have been used to denote the same or similar elements throughout the drawings, and wherein:
Figure 1 is a schematic illustration of a power transmission system in accordance with a preferred embodiment of the present invention;
Figure 2 is a block diagram showing torque transmission paths of the power transmission system of Figure 1;
Figure 3 is a schematic illustration of a power transmission system in accordance with another preferred embodiment of the present invention;
Figure 4 is a block diagram showing torque transmission paths of the power transmission system of Figure 3;
Figure 5 is a schematic illustration of a power transmission system in accordance with still another preferred embodiment of the present invention;
Figure 6 is a block diagram showing torque transmission paths of the power transmission system of Figure 5;
Figure 7 is a schematic illustration of a power transmission system in accordance with a further preferred embodiment of the present invention; and
Figure 8 is a block diagram showing torque transmission paths of the power transmission system of Figure 7.

### DETAILED DESCRIPTION OF THE PREFERRED EMBODIMENT

Because apparatuses cooperating with power transmissions, such as torque converters, hydraulic control systems, and transmission associated devices are well known, the present description will be directed in particular to elements forming part of, or cooperating directly with, transmission mechanisms in accordance with the present invention. It is to be understood that parts or elements not specifically shown or described can take various forms well known to those skilled in the automobile art.

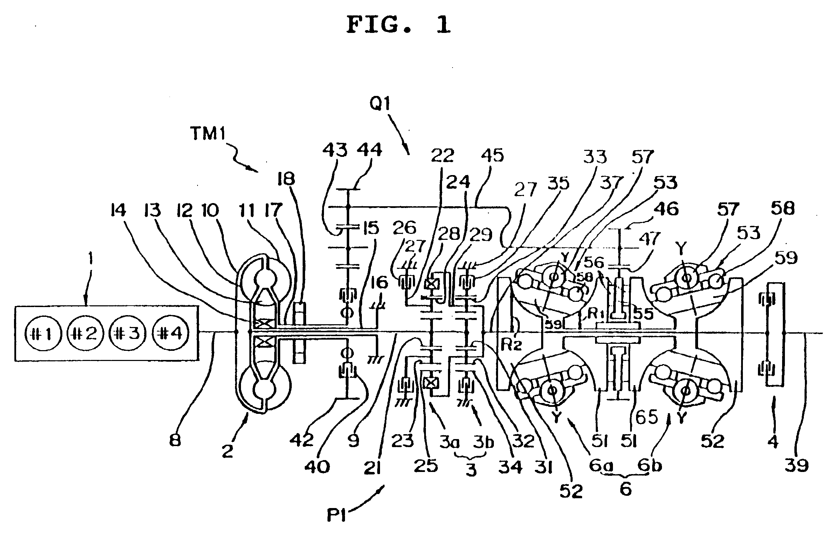

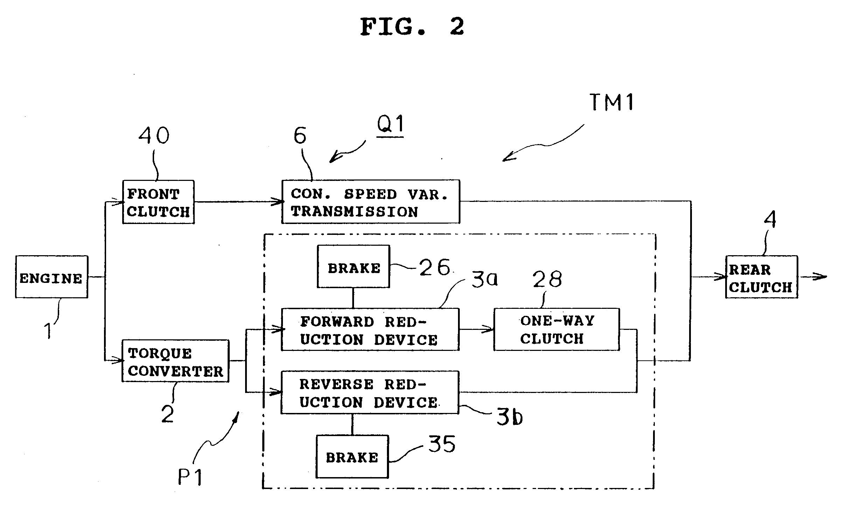

Referring to the drawings in detail, and in particular, to Figures 1 and 2, a power train system TM1 in accordance with a preferred embodiment of the present invention is shown, which is connected with an engine 1, such as an in-line four cylinder internal combustion engine for a front engine-rear drive vehicle, through an engine output shaft 8, such as a crankshaft. The power train system TM1 has a first or primary transmission mechanism P1. The primary transmission mechanism P1 includes a torque converter (TQC) 2 and a speed reduction and forward-reverse changing mechanism (which is hereafter referred to as a forward-reverse mechanism for simplicity) 3 and causes engine torque conversion to effect a change in ratio between engine rpm and driving wheel rpm according to vehicle driving conditions. The converted engine torque is transmitted to drive wheels (not shown) through a hydraulically operated rear clutch (RCLT) 4 for preventing a transmission of reactive torque to the transmission output shaft from the drive wheels through the power train output shaft. The power train system TM1 further has a second or secondary transmission mechanism Q1, including a hydraulically operated front clutch (FCLT) 40 for connecting and disconnecting the transmission of engine torque and a toroidal type of continuous speed variable transmission mechanism (CSVT) 6, which causes continuous engine torque conversion and transmits it to the drive wheel through the rear clutch 4. As will be described, these primary and secondary transmission mechanisms P1 and Q1 are selectively brought into use by means of connection and disconnection of the front clutch 40. Because the torque converter 2 transmits all available engine torque and multiplies it at low speeds, the primary transmission mechanism P1 is used for relatively large transmission gear ratios such as when starting the vehicle and when driving at low speeds.On the other hand, since the secondary transmission mechanism Q1 does not provide relatively large transmission gear ratios but continuously changes transmission gear ratio without being accompanied by shift shock, it is used for relatively small transmission gear ratios such as when driving at middle and high speeds. It is to be noted that the term "transmission gear ratio" as used herein shall mean and refer to the torque ratio or the reciprocal of the number of revolution.

The torque converter 2 has a pump (driver) 11, a turbine 12 (driven) and a stator 13 mounted between the pump 11 and the turbine 12. The pump 11 is connected to the engine output shaft 8 through a pump cover 10 for rotation and has an external hollow shaft 17 extending rearward remote from the engine 1. The external hollow shaft 17 is attached at the middle with an oil pump 18. The stator 13 is connected with an intermediate hollow shaft 15 extending within the external hollow shaft 17. The turbine 12 is integrally fixed to an internal solid turbine shaft 9 extending within the intermediate hollow shaft 15 for rotation.

As the pump 11 discharges oil into the turbine 12, specifically vanes (not shown) of the turbine, the force of the oil tends to turn the turbine 12. Oil is being sprayed into vanes (not shown) of the turbine 12 by the pump 11. The stator 13 intercepts the oil thrown off by the turbine 12 and redirects the path of this oil so it will enter the pump 12 smoothly. As the pump 11 begins to spin, oil is thrown outward into the curved vanes of the turbine 12. The oil then circulates around through the turbine vanes. Instead of being discharged back into the pump vanes, the oil is first passed through the stator 13. The oil strikes the turbine vanes and exerts some force. The force, however, is not enough to cause the heavy turbine to turn, then the oil is directed around and out. Since the stator redirects the oil to the turbine vanes, it can now strike the turbine vanes and, instead of leaving, will continue to circulate back to the turbine vanes. The torque produced by the oil has been increased by adding the extra torque that was lost when the oil left the turbine vanes. By redirecting the stream of oil, the torque has been multiplied.

The forward-reverse mechanism 3 has a forward reduction gearing (FRG) 3a for transmitting torque only when selecting forward gears, a reverse reduction gearing (RRG) 3b for transmitting torque only when selecting a reverse gear, and, in order from the input end, their associated brakes (BRK) 26 and 35 for interchanging the forward and reverse reduction gearings 3a and 3b. The forward reduction gearing 3a is of a double pinion type of planetary gear set which has a front sun gear 21 connected to the turbine shaft 9, first and second front pinions 23 and 24 carried for rotation by a front carrier 22, and a front ring gear 25. The first front pinion 23 is in mesh with both front sun gear 21 and second front pinion 24. The second front pinion 24 is further in mesh with the front ring gear 25. In association with the front carrier 22 there is provided a hydraulically operated forward brake 26. Coupling the forward brake 26 brings the front carrier 22 into fixedly engagement with a stationary portion of a stationary transmission case 27. The front ring gear 25 is connected to a transmission output shaft 37 through a forward one-way clutch (FOWCLT) 28 and a rear carrier 29 of the reverse reduction gearing 3b. In this instance, the forward one-way clutch 28 prevents the front ring gear 25 from reactively driven by the transmission output shaft 37, and hence the drive wheels, while the power train system TM1 operates with the selection of the secondary transmission mechanism Q1.

When the front carrier 22 is held down, the front sun gear 21, the first and second front pinions 23 and 24 and the front ring gear 25 are brought into mesh with one another in this order so as to function as a single gear train, thereby increasing and transmitting torque from the turbine shaft 9 to the transmission output shaft 37 via, in order from the input end, the front sun gear 21, the first and second front pinions 23 and 24, the front ring gear 25, the forward one-way clutch 28 and the rear carrier 29. In this instance, the transmission output shaft 37 turns in the same direction as turbine shaft 9, so as to drive the vehicle forward.

The reverse reduction gearing 3b is also of a double pinion type of planetary gear set which has a rear sun gear 31 connected to the turbine shaft 9, first and second rear pinions 32 and 23 carried for rotation by the rear carrier 29, and a rear ring gear 24. The first rear pinion 32 is in mesh with both rear sun gear 31 and second rear pinion 33. The second rear pinion 33 is further in mesh with the rear ring gear 25. In association with the rear ring gear 34 there is provided a hydraulically operated reverse brake 35. Coupling the reverse brake 35 brings the rear ring gear 34 into fixedly engagement with a stationary portion of the stationary transmission case 27.

When the rear ring gear 34 is held down, the rear sun gear 31 rotates the second rear pinion 33 in mesh with the rear ring gear 34 in an opposite direction with respect to the sun gear 31 via the first rear pinion 33. As a result, the rear carrier 29 is turned in a reduced ratio in an opposite direction with respect to the turbine shaft 9, so as to drive the vehicle backward.

When both the forward brake 26 and the reverse brake 35 are released or unlocked, the forward-reverse mechanism 3 is held neutralized, so as to disconnect the transmission of torque from the turbine shaft 9 to the transmission output shaft 37. The transmission output shaft 37 is connected to the drive wheels through a differential and axle shafts (not shown) via a power train output shaft or propeller shaft 39 locked to the rear clutch 4.

The secondary transmission mechanism Q1 includes the front clutch 40 as an torque input means for connecting and disconnecting torque transmission which is linked to the pump 11 of the torque converter 2 through the external hollow shaft 17. The front clutch 40 is controlled by means of a hydraulic control unit (HCU) to be locked and unlocked or released according to driving conditions. When the clutch 4 is locked, the engine torque is transmitted to the drive wheels through the continuous speed variable transmission 6 via the secondary transmission mechanism Q1 from the engine output shaft 8. On the other hand, uncoupling of the front clutch 40 cuts or disconnect the transmission of torque from the engine output shaft 8 to the continuous speed variable transmission 6 and connects it to the drive wheels through the first transmission mechanism P1. The front clutch 40 is further linked to the continuous speed variable transmission 6 through, in order from the input end, a drive gear 42, an idle gear 43, a first counter gear 44, a counter shaft 45, a second counter gear 46 and a driven gear 47.

The continuous speed variable transmission 6, which is of a toroidal type, has a pair of toroidal transmission mechanisms, such as a front toroidal transmission mechanism 6a and a rear toroidal transmission mechanism 6a. These front and rear toroidal transmission mechanisms 6a and 6b are identical in structure and operation and are arranged symmetrically with respect to a plane perpendicular to the transmission output shaft 37 relative to each other so as to form two torque paths selectively available. The symmetrical arrangement cancels reaction forces of these front and rear toroidal transmission mechanisms 6a and 6b so that the continuous speed variable transmission 6 is held stable.

Each toroidal transmission mechanism 6a, 6b has an input disk 51 having an input toroidal surface 51a, which is mounted on the transmission output shaft 37 for rotation and an output disk 52 having an output toroidal surface 52a, which is secured to the transmission output shaft 37.These input and output toroidal surfaces 51a and 52a are arranged coaxial with the transmission output shaft 37 and are faced to each other. The toroidal transmission mechanism 6a, 6b further has a torque transmission means, such as a slide roller 53, disposed between and in contact with the input and output toroidal surfaces 51a and 52a of the input and output disks 51 and 52 so as to transmit torque from the input disk 51 to the output disk 52. The slide roller 53 is continuously angled relative to both the input and output toroidal surfaces 51a and 52a with respect to the axis of the transmission output shaft 37. According to angles of inclination, the transmission gear ratio is continuously changed. The input disk 51 is engaged with an interim disk 55, to which the driven gear 47 is locked, via a cam 56. In this instance, the larger the torque input into the input disk 51 is, the stronger the force with which the interim disk 55 is pressed against the input disk 51 becomes. The torque transmission means 53 has a body 57 and a roller 59 fitted to the body 57 by means of a bearing 58 so as to turn about an axis of rotation Y. This roller 59 has a convex outer peripheral surface which matches with concave toroidal surfaces 51a and 52a of the input and output disks 51 and 52 and is kept in sliding contact with them. Consequently, rotation of the input disk 51 causes rotation of the roller 59 accompanied by rotation of the output disk 52, so that the each toroidal transmission mechanism 6a, 6b transmits torque from the input disk 51 to the output disk 52. In this event, the transmission gear ratio R of each toroidal transmission mechanism 6a, 6b is defined by a ratio of a radial distance R₂ from the transmission output shaft 37 to where the roller 59 is in contact with the concave surface of the output disk 52 relative to a radial distance R₁ from the transmission output shaft 37 to where the roller 59 is in contact with the concave surface of the input disk 51. Since these radial distances R₁ and R₂ are variable with an inclination of the axis of rotation Y of the roller 59 with respect to the transmission output shaft 37, regulating the angle of inclination of the axis Y of rotation, which is accomplished by the hydraulic circuit, varies the transmission gear ratio R_{T} of each toroidal transmission mechanism 6a, 6b as desired. Torque from the outer disk 52 via the transmission output shaft is transmitted to the propeller shaft 39 through the rear clutch 4.

The transmission of torque between the engine output shaft 8 and the drive wheels is connected and disconnected, and is changed in transmission path by selectively locking and unlocking the hydraulically operated frictional coupling elements, namely the clutches 38 and 40, the brakes 26 and 35 and one-way clutches 28 and 41.

Specifically, the extent of transmission ratio R_{P} (which is referred to as a torque converter transmission ratio in this specification) that the primary transmission mechanism P1 and the extent of transmission ratio R_{P} (which is referred to as a toroidal transmission ratio in this specification) that the secondary transmission mechanism Q1 can have are previously established such that the maximum toroidal converter transmission ratio R_{Qmax} is greater than the minimum torque converter transmission ratio R_{Pmin} and the extent of torque converter transmission ratio R_{Pmin} and the extent of toroidal converter transmission ratio R_{Qmax} partially overlap. More desirably, interchanging between the primary and secondary transmission mechanisms P1 and Q1 is accomplished only in predetermined driving conditions in which the transmission ratio is in the overlap region.

The operation of the power train system TM1 depicted in Figures 1 and 2 will be described hereafter for various modes.

### Neutral Mode

In the neutral mode, which is generally established during stopping, or when the power train system TM1 is in a neutral range and in a park range, the rear clutch 4 is locked, and all of the front clutch 40, the forward brake 26 and the reverse brake 35 are unlocked. In this instance, the transmission of torque from the engine 1 to the continuous speed variable transmission 6 is disconnected by means of the front clutch 40, which is unlocked, so that no torque transmission is caused to the propeller shaft 39 even though the rear clutch 4 is locked. In the neutral mode, the continuous speed variable transmission 6 is positively prevented from operation under insufficient lubrication.

### Forward Torque conversion Mode

In the forward torque conversion mode which is established on starting and during driving at low speeds, the rear clutch 4 and the forward brake 26 are locked, and the front clutch 40 and the reverse brake 35 are unlocked. In the forward driving in which the transmission of torque is connected from the engine to the propeller shaft 39 through the primary transmission mechanism P1, the front clutch 40 is held unlocked until the transmission ratio R_{T} reaches the maximum toroidal converter transmission ratio P_{Qmax}, then the secondary transmission mechanism Q1 is independent from the transmission of torque. The primary transmission mechanism P1 reduces and transmits torque from the turbine shaft 9 to the transmission output shaft 37 through the forward reduction gearing 3a. In this event, by means of the multiplication of torque by the torque converter 2 and the reduction of speed (multiplication of torque) by the forward reduction gearing 3a, a greatly high torque is output to the transmission output shaft 37, and hence to the propeller shaft 39 so as to drive the drive wheels in the forward direction.

### Forward Toroidal Transmission Mode

In the forward toroidal transmission mode which is established during driving at middle and at high speeds, the rear clutch 4, the front clutch 40 and the forward brake 26 are locked, and the reverse brake 35 is unlocked. In this mode, the forward one-way clutch 28 of the primary transmission mechanism P1 is principally unlocked, then the substantial transmission of torque from the engine output shaft 8 to the transmission output shaft 37 is independent from the primary transmission mechanism P1, and is accomplished through the secondary transmission mechanism Q1. During this torque transmission, the transmission ratio is continuously varied by the continuous speed variable transmission 6 in accordance with driving conditions without causing any shift shock.

### Reverse Torque Converter Mode

In the reverse torque converter mode which is established for driving backward, the rear clutch 4 and the reverse brake 35 are locked, and the forward brake 26 and the front clutch 40 are unlocked. In this mode, the substantial transmission of torque from the engine output shaft 8 to the transmission output shaft 37 is accomplished through the primary transmission mechanism P1, and is independent from the secondary transmission mechanism Q1. During this transmission, the primary transmission mechanism P1 reduces and transmits torque from the turbine shaft 9 to the transmission output shaft 37 through the reverse reduction gearing 3b. In this event, by means of the multiplication of torque by the torque converter 2 and the reduction of speed (multiplication of torque) by the reverse reduction gearing 3b, a greatly high torque is output to the transmission output shaft 37, and hence to the propeller shaft 39, so as to drive the drive wheels in the reverse direction.

### Towing Mode

In the towing mode which is established when the vehicle needs to disconnect unconditionally the transmission of torque between the power train (which is referred to a combined unit of the engine 1 and the power train system TM1) and the drive wheels, such as when the vehicle is towed by another vehicle, all of the rear clutch 4, the forward brake 26, the reverse brake 35 are the front clutch 40 are unlocked. The reason of unlocking of the rear clutch 4 in the towing mode is that, if the rear clutch 4 is locked, or otherwise if the power train system MT1 does not have such a rear clutch, the power plant is possibly reactively driven by the drive wheels and in this event, since the engine 1, which is stopped, does not force lubrication oil into the power plant, there is a fear of wearing movable elements of the power plant. Unlocking of the rear clutch 4 along with all other frictional coupling elements, namely the forward brake 26, the reverse brake 35 and the front clutch 40, avoids the transmission of reactive torque to the power train system.

As described above, the power train system TM1 is provided with the front clutch 40 on its torque input side and the rear clutch 4 on its output side as means for connecting and disconnecting of the transmission of engine torque in accordance with driving conditions. Accordingly, these clutch 4 and 40 disconnect the transmission of engine torque when the engine 1 stops and when the power transmission 1 selects the neutral range and the park range, so that the continuous speed variable transmission 6 is positively prevented from being driving without lubrication or with insufficient lubrication when starting the engine and when the vehicle is towed. This prevents wearing and the durability of the toroidal surfaces 51a and 52a of the input and output disks 51 and 52 of the continuous speed variable transmission 6. Furthermore, the toroidal type of continuous speed variable transmission 6, of which the toroidal surfaces 51a and 52a of the input and output disks 51 and 52 severely suffers adverse influences attributive to driving without oil films formed on the toroidal surfaces 51a and 52a, is positively prevented from being driven without lubrication or with insufficient lubrication.

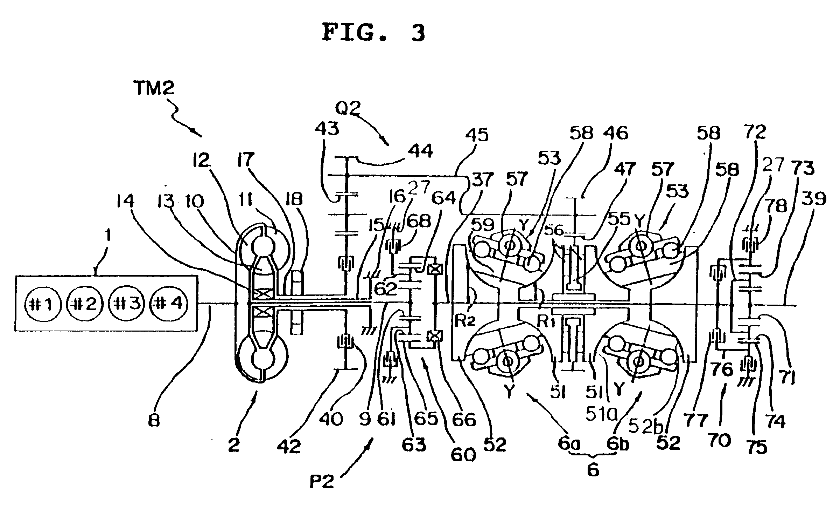

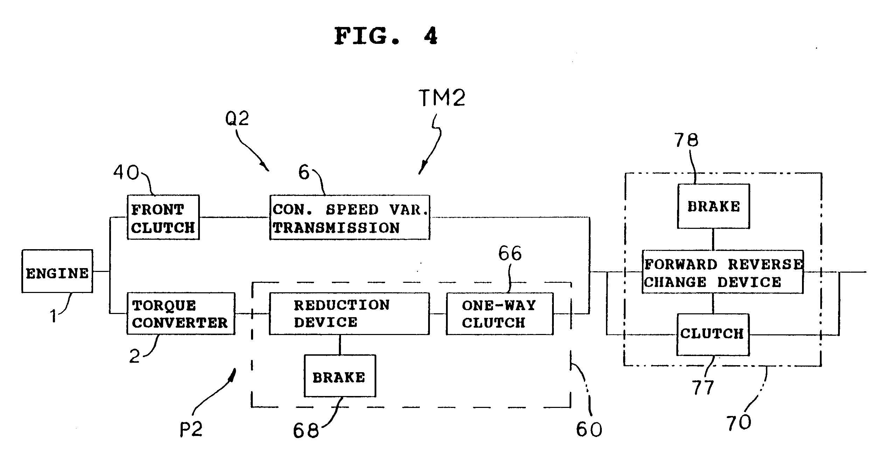

Referring to Figures 3 and 4, a power train system TM2 in accordance with another preferred embodiment of the present invention is shown, which is almost similar to the power train system TM1 of the previous embodiment, excepting the provision of a reduction mechanism (RDC) 60 and a forward-reverse changing mechanism 70, arranged in a primary transmission mechanism P2, in place of the speed reduction and forward-reverse changing mechanism 3 in the primary transmission mechanism P1 of the previous embodiment shown in Figure 1. The reduction mechanism 60 is located in P2, where the speed reduction and forward-reverse mechanism 3 is located in P1, and the forward-reverse changing mechanism 70 is located after a continuous speed variable transmission 6, i.e. between a transmission output shaft 37 and a propeller shaft 39.

The reduction mechanism 60 is of a double pinion type of planetary gear set having a sun gear 61 connected to a turbine shaft 9, first and second pinions 63 and 64 carried for rotation by a carrier 62, and a ring gear 65. The first pinion 63 is in mesh with both the sun gear 61 and the second pinion 64. The second pinion 64 is further in mesh with the ring gear 65. The carrier 62 is linked to a stationary portion of a transmission case 27 through a hydraulically operated brake (BRK) 68. Similarly, the ring gear 65 is coupled to the transmission output shaft 37 through a hydraulically operated one-way clutch (OWCLT) 66. In this instance, the one-way clutch 66 prevents the ring gear 65 from reactively driven by the transmission output shaft 37, and hence the drive wheels, while the power train system TM2 operates with the selection of a secondary transmission mechanism Q2.

The reduction mechanism 60 is governed in gear ratio by the brake 68 so as to increase the engine torque transmitted to the turbine shaft 9 for speed reduction and transmit it to the transmission output shaft 37. In this event, the transmission output shaft 37 is rotated in the same direction as the turbine shaft 9.

The forward-reverse changing mechanism 70 is also of a double pinion type of planetary gear set having a sun gear 71 connected to the propeller shaft 39, first and second pinions 73 and 74 carried for rotation by a carrier 72, and a ring gear 75. The first pinion 73 is in mesh with both the sun gear 71 and the second pinion 74. The second pinion 74 is further in mesh with the ring gear 75. The carrier 72 is secured to the propeller shaft 39. A connecting ring 76 is provided so as to interconnect the ring gear 75 and the transmission output shaft 37 via a hydraulically operated change clutch (BRK) 77. Locking of the change clutch 77 creates the connection of the carrier 72 and the ring gear 75. In association with the ring gear 75 there is provided a hydraulically operated brake (BRK) 78. Locking of the brake 78 brings the ring gear 75 into engagement with a portion of the transmission case 27.

Whenever the change clutch 77 is locked and the brake 78 is unlocked, the carrier 72 and the ring gear 75 are brought into fixed connection, then, creating a direct locking of the planetary gear set of the forward-reverse changing mechanism 70 so as to rotate the transmission output shaft 37 and the propeller shaft 39 all together. In this instance, the drive wheels are forced to rotate in the forward direction. Conversely, when the change clutch 77 is unlocked and the brake 78 locked, the ring gear is held down, the first and second pinions 73 and 74 revolve around the sun gear 71. Accompanying the revolution of the first and second pinions 73 and 74, the second pinion 74, which is in mesh with the ring gear 75, rotates on its own axis. The rotation of the second pinion 74 is transmitted to the sun gear 71 through the first pinion 73. In this instance, the sungear 71 rotates in the opposite direction with respect to the direction of rotation of the carrier 72, so that the propeller shaft 39 and the transmission output shaft 37 turn in the opposite directions, and hence the drive wheels are forced to rotate in the reverse direction.

When both change clutch 77 and brake 78 are unlocked, the forward-reverse changing mechanism 70 is neutralized so as to disconnect the transmission of engine torque between the transmission output shaft 37 and the propeller shaft 39, which corresponds to a state in which the rear clutch 4 is unlocked in the previous embodiment shown in Figures 1 and 2. This indicates that the forward-reverse changing mechanism 70 includes the function of the rear clutch 4 of the previous embodiment.

The operation of the power train system TM2 depicted in Figures 3 and 4 will be described hereafter for various modes.

### Neutral Mode

In the neutral mode, which is generally established during stopping, or when the power train system TM2 is in a neutral range and in a park range, the change clutch 77 and the reverse brake 78 are unlocked. In this instance, the transmission of torque between the transmission output shaft 37 and the propeller shaft 39 is completely disconnected. Accordingly, if the vehicle is towed even with the engine 1 stopped, the power train system TM2 does not suffer any trouble in the neutral mode. Furthermore, if the engine 1 is started, the engine output torque is not transmitted to the continuous speed variable transmission 6, so that there is not caused any trouble.

### Forward Torque conversion Mode

In the forward torque conversion mode which is established on starting and during driving at low speeds, the front clutch (FCLT) 40, the change clutch 77 and the reverse brake 78 are locked all together. The power train system TM2 provides the same power transmission characteristics for forward and reverse driving in the forward torque conversion mode as in the forward torque conversion mode of the power train system TM1 of the previous embodiment.

### Forward Toroidal Transmission Mode

In the forward toroidal transmission mode which is established during driving at middle and high speeds, the front clutch 40 and the change clutch 77 are unlocked, and the reverse brake 78 is locked. The power train system TM2 provides the same power transmission characteristics in the forward toroidal transmission mode as in the forward toroidal transmission mode of the power train system TM1 of the previous embodiment.

### Reverse Torque Converter Mode

In the reverse torque converter mode which is established for driving backward, the front clutch 40 and the change clutch 77 are unlocked, and the reverse brake 78 is locked. The power train system TM2 provides the same power transmission characteristics in the reverse torque conversion mode as in the reverse torque conversion mode of the power train system TM1 of the previous embodiment.

The power train system TM2 shown in Figures 3 and 4 needs not to provide a towing mode.

The provision of the front clutch 40 and the forward-reverse changing mechanism 70 located, respectively, before and after the continuously speed variable transmission 6 prevents the transmission of reactive torque to the continuously speed variable transmission 6 during towing the vehicle and on starting the engine 1. In addition, during towing the vehicle, tractional resistance is lowered, and on starting the engine 1, the engine 1 is prevented from lowering its starting ability.

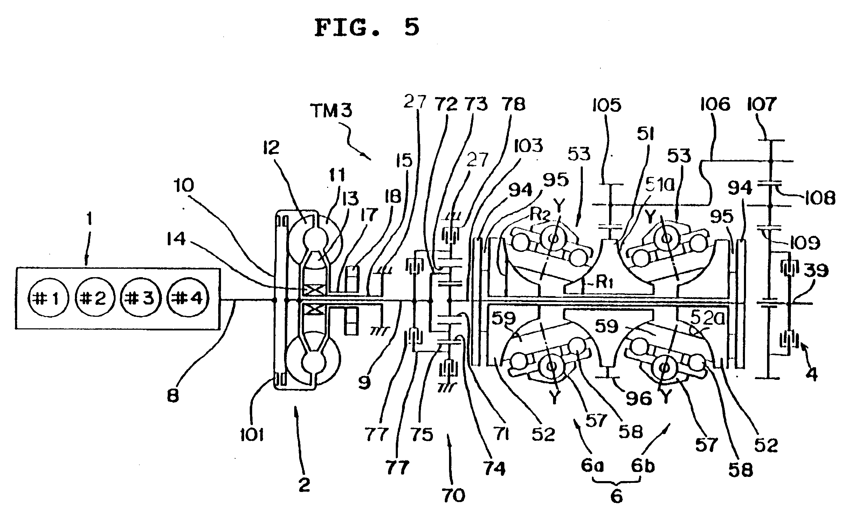

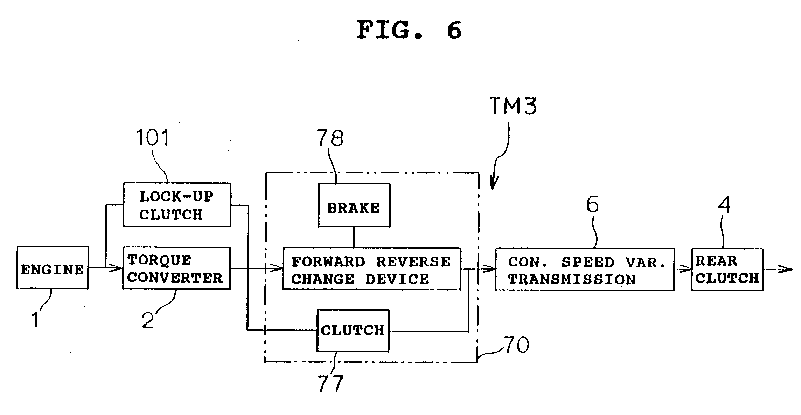

Referring to figures 5 and 6, a power train system TM3 in accordance with another preferred embodiment of the present invention is shown, which is almost similar to the power train systems TM1 and TM2 of the previous embodiments, excepting that there is no separation of first and second transmission mechanisms in the power train system TM3. Specifically, the power train system TM3 is provided with a torque converter 2, a forward-reverse change clutch (FRCLT) 70 and a continuously speed variable transmission 6 arranged in series in this order from the input end. After the continuously speed variable transmission 6 there is provided a rear clutch 4. The torque converter 2 cooperates with a lock-up clutch (LUCLT) 101 so as to create mechanical coupling between an engine output shaft 8 and a turbine shaft 9 when lock-up clutch 101 is locked.

The forward-reverse change clutch 70 is identical in structure with that of the power train system TM2 of the previous embodiment, but is located between the turbine shaft 9 and a connecting shaft 103. The continuously speed variable transmission 6 has a reversed arrangement of toroidal disks 51 and 52. That is, the toroidal disk 51 is used for torque output, and the toroidal disk 52 is used for torque input. The transmission of torque takes place from the output toroidal disk 51 to the propeller shaft 39 through gears 96 and 105, a counter shaft 106 and gears 107,108 and 109, in this order from the input end. Between the final gear 109 and the propeller shaft 39 there is located the rear clutch 4.

The provision of the forward-reverse change mechanism 70 and the rear clutch 4 located, respectively, before and after the continuously speed variable transmission 6 prevents the transmission of reactive torque to the continuously speed variable transmission 6 during towing the vehicle and on starting the engine 1. In addition, during towing the vehicle, tractional resistance is lowered, and the engine 1 is prevented from lowering its starting ability.

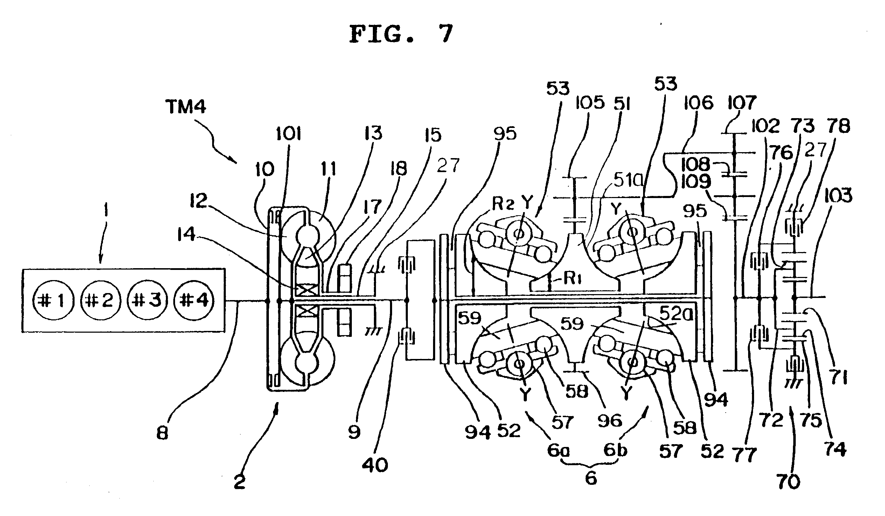

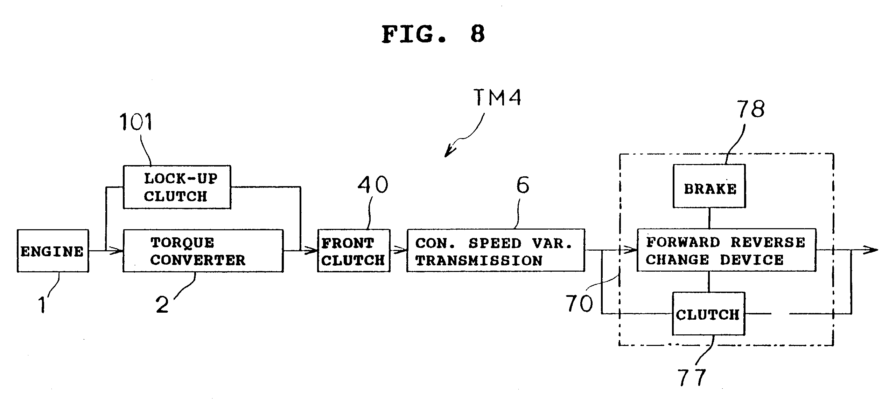

Referring to figures 7 and 8, a power train system TM4 in accordance with still another preferred embodiment of the present invention is shown, which is almost the same in structure as the power train system TM3 of the previous embodiment shown in Figures 5 and 6, excepting the arrangement of a front clutch 40 and a forward-reverse change mechanism 70 located, respectively, before and after the continuously speed variable transmission 6.

This arrangement of the power train system TM4 also prevents the transmission of reactive torque to the continuously speed variable transmission 6. In addition, during towing the vehicle, tractional resistance is lowered, and the engine 1 is prevented from lowering its starting ability.

It is also to be understood that although the present invention has been described in detail with respect to a preferred embodiment thereof, various other embodiments and variants may occur to those skilled in the art. Such other embodiments and variants fall within the scope and spirit of the invention and are intended to be covered by the following claims.

## Claims

1. In an automotive vehicle including a power train system having continuous speed variable transmission means for producing a variable frictional transmission of engine torque from the automotive vehicle engine to a transmission output shaft, for transmitting the engine torque to the power train output shaft, the improvement comprising:
front clutch means disposed between the engine of the automotive vehicle and said continuous speed variable transmission means for connecting and disconnecting a transmission of engine torque to said continuous speed variable transmission means; and
rear clutch means disposed between said continuous speed variable transmission means and said power train output shaft for preventing transmission of reactive input torque to said transmission output shaft from said power train output shaft;
control means for selectively locking and unlocking said front and rear clutch means in accordance with vehicle driving conditions.

2. In an automotive vehicle as defined in claim 1, wherein said control means for selectively locking and unlocking said front and rear clutch means operates hydraulically.

3. In an automotive vehicle as defined in claim 2, including means to actuate said hydraulic control means to unlock said front clutch means and to lock said rear clutch means in response to said continuous speed variable transmission means being in its neutral position and in its park position.

4. In an automotive vehicle as defined in claim 2, wherein said means to actuate said hydraulic control means unlocks both said front and rear clutch means in response to said engine being stopped.

5. In an automotive vehicle as defined in claim 1, wherein said continuous speed variable transmission means comprises a toroidal type transmission comprising an input disk with an input toroidal surface formed on one surface, an output disk with an output toroidal surface formed on one surface, said input and output toroidal surfaces being arranged coaxial with said transmission output shaft and being faced to each other, and a slide roller disposed between and in contact with said input and output toroidal surfaces so as to be continuously changed in inclination angle relative to said input and output toroidal surfaces with respect to an axis of said transmission output shaft.
